# FASCICULE DE BREVET EUROPEEN

(11) **EP 1 650 109 B1**
(45) Date de publication et mention de la délivrance du brevet: **11.02.2009**
(21) Numéro de dépôt: 05292075.8
(22) Date de dépôt: 06.10.2005
(51) Int. Cl.: B62D 11/14

(54) **Système de transmission hybride pour véhicule**
Hybrides Kraftübertragungssystem
Hybrid transmission system

(30) Priorité: 20.10.2004 FR 0411117
(43) Date de publication de la demande: 26.04.2006
(73) Titulaire: NEXTER Systems, 42328 Roanne (FR)
(72) Inventeur: Germenot, Olivier, 78000 Versailles (FR); Timmer, Bernard, 78700 Conflans Saint-Honorine (FR); Vagner, Alain, 75002 Paris (FR)
(74) Mandataire: Célanie, Christian

(56) Documents cités:
- EP-A- 1 238 890
- WO-A-89/03335
- DE-A1- 3 832 529
- US-A- 4 998 591
- US-A- 5 195 600

## Description

La présente invention concerne un système de transmission hybride de puissance motrice pour un véhicule à train de roulement de type roue ou chenille et à direction par ripage.

Il est connu pour de tels véhicules, pour transmettre la puissance d'un moteur, classiquement thermique, de placer entre l'arbre de sortie moteur et les arbres des roues motrices ou les barbotins d'entraînement des chenilles des systèmes de transmission plus ou moins complexes à base d'engrenages afin de pouvoir distribuer la puissance entre toutes les roues/barbotins. Si la direction est obtenue par des roues directrices pouvant être orientées par braquage, lesdits systèmes de transmission doivent permettre une répartition de la vitesse entre le côté gauche et droit du véhicule afin de permettre aux roues extérieures au virage de tourner plus que les roues intérieures. Ceci est classiquement réalisé par un dispositif mécanique nommé différentiel. Si la direction est obtenue par ripage, le système de transmission assure une répartition des vitesses entre le côté gauche et le côté droit afin de provoquer ledit virage. De tels systèmes peuvent commander une ou plusieurs roues motrices par côté. L'évolution technologique conduit à faire évoluer de telles architectures comprenant un moteur thermique et une transmission uniquement mécanique vers des transmissions hybrides électromécaniques ou même uniquement électriques.

Il est connu dans le domaine des propulsions ou des transmissions électriques de commander chaque roue indépendamment en réalisant l'entraînement de chaque roue motrice/barbotin par un moteur électrique directement solidaire de la roue motrice/barbotin. Ceci permet une commande individuelle de chaque roue motrice/barbotin mais conduit à une accumulation de masse du fait de la multiplication des moteurs en fonction du nombre de roues.

EP-A-1 238 890 décrit un système de transmission hybride selon le préambule de la revendication 1.

La présente invention propose un système de transmission dit hybride. La propulsion est assurée par un moteur thermique ou avantageusement électrique, le pilotage de la transmission est assuré par un moteur électrique et le reste de la transmission est réalisé par des composants mécaniques.

L'ensemble constitue un système de transmission électromécanique.

L'invention a pour objet un système de transmission hybride de puissance motrice pour véhicule à train de roulement de type roue ou chenille et à direction par ripage intégrant un dispositif de propulsion comprenant un moteur de propulsion, un arbre de propulsion, un réducteur gauche et un réducteur droit, ledit arbre de propulsion étant entraîné par ledit moteur de propulsion et entraînant d'une part un train de roulement droit au travers du réducteur droit et d'autre part un train de roulement gauche au travers du réducteur gauche, ledit système de transmission comprenant un dispositif de direction pilotant le réducteur gauche et le réducteur droit afin de produire des vitesses différentes entre le train de roulement gauche et le train de roulement droit, le réducteur gauche comprend un premier train épicycloïdal dont l'arbre porte satellites est solidaire de l'arbre de propulsion et l'arbre planétaire central est solidaire du train de roulement gauche, le réducteur droit comprend un second train épicycloïdal dont l'arbre porte satellites est solidaire de l'arbre de propulsion et l'arbre planétaire central est solidaire du train de roulement droit et le dispositif de direction comprend un arbre de direction et un inverseur, ledit arbre de direction engrenant d'une part sur la couronne planétaire du premier train épicycloïdal et d'autre part sur la couronne planétaire du second train épicycloïdal via l'inverseur, système de transmission caractérisé en ce qu'il comprend un premier moyen de couplage progressif et inversible entre le moteur de propulsion et l'arbre de direction.

Selon une autre caractéristique de l'invention, le dispositif de direction présente un rapport de réduction égal à 1.

Selon une autre caractéristique de l'invention, l'inverseur comporte un train d'engrenage simple.

Selon une autre caractéristique de l'invention, le dispositif de direction comprend un ralentisseur de l'arbre de direction.

Selon une autre caractéristique de l'invention, le ralentisseur est un frein.

Selon une autre caractéristique de l'invention, le dispositif de direction comprend un moteur de direction inversible entraînant l'arbre de direction.

Selon une autre caractéristique de l'invention, le dispositif de direction comporte un embrayage de direction entre le moteur de direction et l'arbre de direction.

Selon une autre caractéristique de l'invention, le ralentisseur est réalisé par le moteur de direction réversible et passif.

Selon une autre caractéristique de l'invention, le dispositif de propulsion comporte un embrayage de propulsion entre le moteur de propulsion et l'arbre de propulsion.

Selon une autre caractéristique de l'invention, le premier moyen de couplage comprend au moins un renvoi de puissance, un premier coupleur pilotable et un second coupleur pilotable, le moteur de propulsion entraînant le renvoi de puissance, ledit renvoi de puissance entraînant les deux coupleurs en sens opposés, lesdits coupleurs entraînant l'arbre de direction lorsqu'ils sont pilotés.

Selon une autre caractéristique de l'invention, le système de transmission comprend un second moyen de couplage entre le moteur de direction et l'arbre de propulsion.

Selon une autre caractéristique de l'invention, le second moyen de couplage comprend un embrayage de couplage.

Selon une autre caractéristique de l'invention, le système de transmission comprend un premier moyen de détection d'une défaillance du moteur de propulsion, un second moyen de détection d'une défaillance du moteur de direction, un boîtier de commande et contrôle des embrayages et des coupleurs, afin de piloter les différentes configurations nominales et dégradées du système parmi NOMINAL DROIT, NOMINAL VIRAGE, PUISSANCE PROPULSION, PUISSANCE DIRECTION, DIRECTION DEGRADE, PROPULSION DEGRADE DROIT et PROPULSION DEGRADE VIRAGE.

Selon une autre caractéristique de l'invention, le premier moyen de détection d'une défaillance du moteur de propulsion comprend un premier capteur de vitesse de l'arbre de propulsion et le second moyen de détection d'une défaillance du moteur de direction comprend un second capteur de vitesse de l'arbre de direction.

Un avantage du système selon l'invention est de permettre, par rapport à une architecture électrique comportant un moteur indépendant par roue, par ensemble de roues ou par fonction propulsion ou direction, de réduire sensiblement la masse du système de transmission.

Un autre avantage du système selon l'invention est de permettre la réalisation du système selon deux blocs distincts couplés uniquement par deux arbres de transmission. Les deux moteurs, composants principaux, sont disposés chacun dans un des blocs. Cette disposition est avantageuse pour la mise en place du système dans le véhicule en ce qu'elle permet de réserver des espaces importants pour l'aménagement du véhicule. Cette disposition est aussi avantageuse de par la réduction de la vulnérabilité qu'elle confère.

Un autre avantage du système selon l'invention est de présenter un système plusieurs fois redondé. Ceci est avantageux en ce que le système est tolérant aux pannes. Le système peut notamment continuer de fonctionner en cas de défaillance de l'un ou l'autre des deux moteurs. Ceci réduit encore la vulnérabilité d'un tel système.

Avantageusement encore, l'architecture redondé du système selon l'invention permet, en fonctionnement nominal, une utilisation optimisée des composants permettant une fourniture de puissance additionnelle dans des configurations extrêmes permettant d'atteindre des performances augmentées.

D'autres caractéristiques, détails et avantages de l'invention apparaîtront plus clairement à la lumière de la description détaillée donnée ci-après à titre indicatif en relation avec des dessins sur lesquels :
- les figures 1 à 6 présentent des vues schématiques de différents modes de réalisation du système de transmission objet de l'invention,
- les figures 7 à 13 illustrent différents modes de fonctionnement dudit système de transmission.

L'invention concerne un système de transmission 1 de la puissance motrice pour un véhicule. Ce système transmet la puissance d'un moteur de propulsion 4 aux trains de roulement 8, 9. Le moteur de propulsion 4 peut être de tout type connu : thermique, hydraulique, électrique... Dans le cadre de l'invention il est avantageusement électrique. Les trains de roulement gauche 8 et droit 9 peuvent être des chenilles ou des roues. Dans le cas de roues, il est possible d'avoir une, deux ou plusieurs roues de chaque côté du véhicule. Le système de transmission 1 entraîne les roues motrices. Certaines roues peuvent être libres et ne pas être entraînées par le système 1. L'invention s'applique particulièrement aux architectures de transmission en H, à savoir aux architectures de transmission présentant des trains de roulement 8, 9 sans liaison d'entraînement directe entre le côté gauche et le côté droit. Sont exclues notamment du cadre de l'invention les architectures en I où une même puissance motrice est transmise solidairement aux deux trains de roulement 8, 9 des côtés gauche et droit reliés par un essieu. La séparation entre le côté gauche et le côté droit permet de commander une transmission de puissance différente entre le côté gauche et le côté droit et permet ainsi de produire un virage par ripage des trains de roulement 8 et 9. L'invention est applicable à un véhicule à direction par ripage et permet de commander une telle direction par commande différentielle des puissances transmises respectivement au train de roulement gauche 8 et au train de roulement droit 9. L'invention est aussi applicable à un véhicule à direction par braquage. Il est possible de superposer une direction par ripage et une direction par braquage. L'invention est alors aussi applicable à une telle direction mixte.

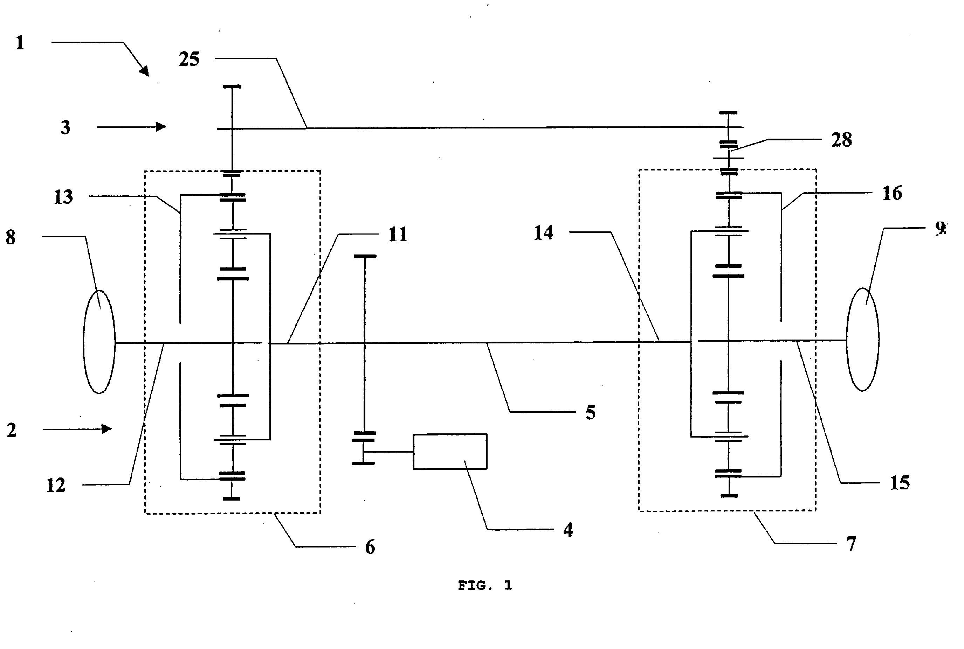

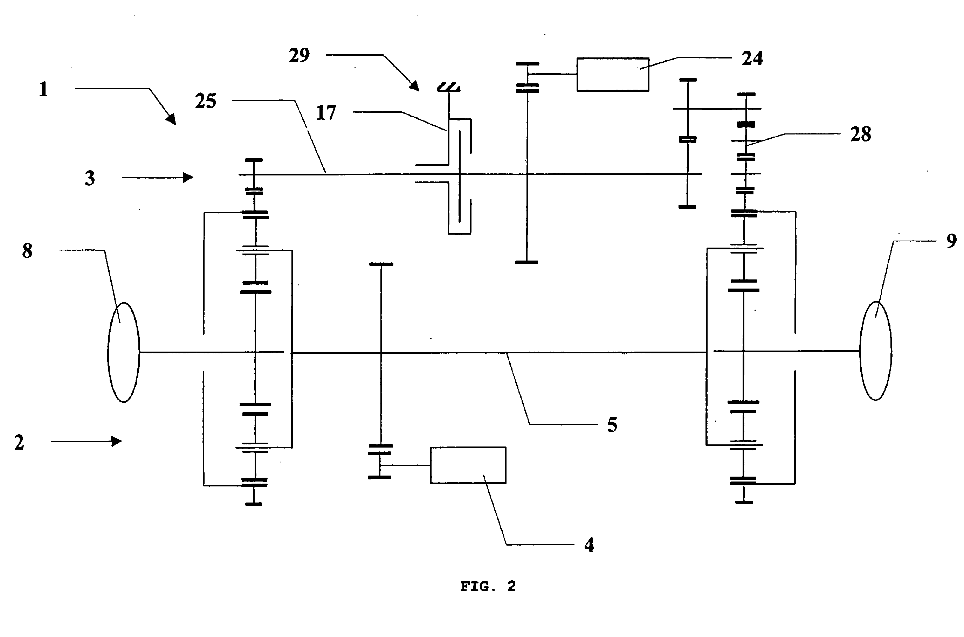

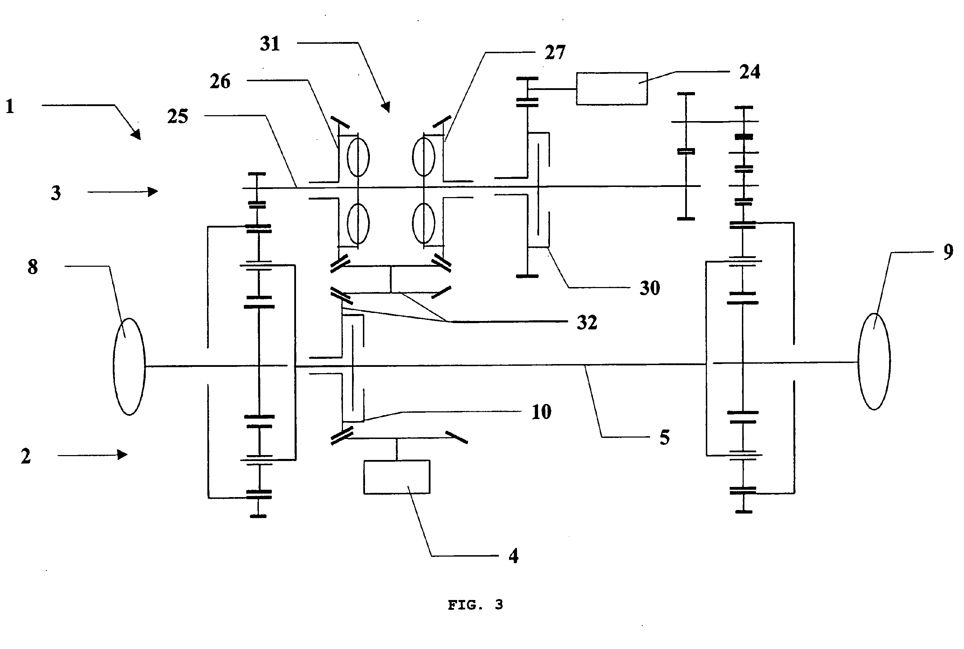

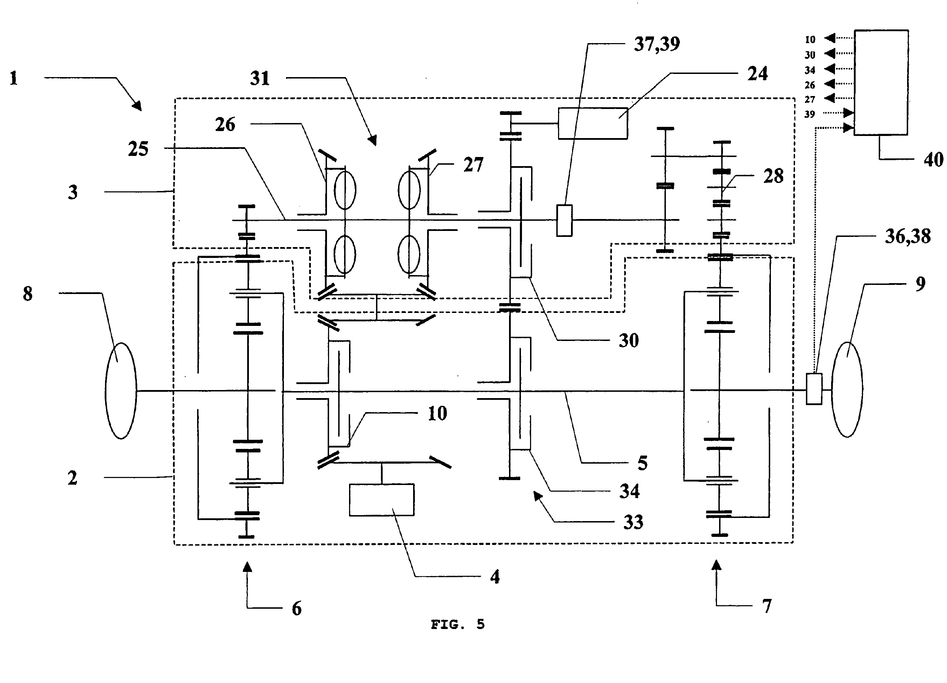

La figure 1 illustre un premier mode de réalisation du système de transmission 1 selon l'invention. Le système 1 comprend un dispositif de propulsion 2 et un dispositif de direction 3. Le dispositif de propulsion 2 comprend un moteur de propulsion 4 qui entraîne en rotation un arbre de propulsion 5. Cet entraînement s'effectue soit par une prise de force directe soit comme illustré sur la figure 1 au moyen d'un train d'engrenage intermédiaire. Ce train d'engrenage peut être un train droit comme illustré sur les figures 1 ou 2, un train à renvoi conique comme illustré sur les figures 3 ou 5 ou tout autre type de couplage en rotation, connu de l'homme de l'art. L'arbre de propulsion 5 ainsi entraîné transmet la rotation au train de roulement gauche 8 et au train de roulement droit 9. On entend ici par train de roulement 8, 9, l'élément d'entraînement qui peut être un barbotin de chaque côté assurant l'entraînement d'une chenille, une roue de chaque côté ou encore un dispositif de démultiplication qui transmet une puissance à plusieurs roues de chaque côté. Un tel dispositif de démultiplication est classiquement réalisable par des mécanismes bien connus de l'homme de l'art à base d'engrenages, de transmissions à chaîne ou équivalents. Si une rotation du moteur de propulsion 4 dans un sens produit une rotation des trains de roulement 8, 9 et permet de réaliser une marche avant du véhicule, alors une rotation dudit moteur de propulsion 4 en sens opposé produit une rotation des trains de roulement 8, 9 en sens opposé et permet de réaliser une marche arrière du véhicule. Dans le cas d'un moteur de propulsion 4 électrique ceci s'effectue avantageusement par inversion du sens de rotation du moteur. Dans le cas d'un moteur thermique ceci est avantageusement réalisé par l'intermédiaire d'une boite de vitesse.

Avantageusement et selon l'invention, un réducteur gauche 6, respectivement droit 7, est intercalé entre l'arbre de propulsion 5 et le train de roulement gauche 8, respectivement droit 9. Une caractéristique essentielle de l'invention est que le système de transmission 1 comprend un dispositif de direction 3. Ce dispositif 3 pilote le réducteur gauche 6 et le réducteur droit 7 afin de répartir différentiellement la puissance entre le côté gauche et le côté droit produisant ainsi des vitesses différentielles entre le côté gauche et le côté droit afin de produire un virage.

Un mode de réalisation particulier de cette invention consiste à réaliser chaque réducteur 6, 7 par un train épicycloïdal. Un train épicycloïdal est un mécanisme à base d'engrenage bien connu de l'homme de l'art. Ce mécanisme comporte un engrenage central nommé planétaire central et solidaire d'un arbre planétaire central 12, 15. Autour de ce planétaire central et en liaison d'engrènement avec ce dernier, des engrenages satellites sont disposés. Ces satellites, au moins au nombre de deux, peuvent tourner librement chacun autour de son axe central. Les axes centraux de tous les satellites sont solidarisés par un porte satellites relié à un arbre porte satellites 11, 14. Cet arbre porte satellites 11, 14 est coaxial de l'arbre planétaire central 12, 15. Une première couronne dentée intérieure entoure ces satellites avec lesquels elle engrène. Cette couronne, coaxiale du planétaire central, est nommée couronne planétaire 13, 16. Un tel mécanisme présente trois prises de puissance : l'arbre planétaire central 12, 15, l'arbre porte satellites 11, 14 et la couronne planétaire 13, 16. Pour les deux premières, la prise de puissance s'effectue sur l'arbre associé 12, 13, 14, 15. Pour la couronne planétaire 13, 16, la prise de puissance s'effectue, par exemple, par engrènement sur une seconde couronne dentée extérieure. Cette dernière prise de puissance permet de contrôler le mouvement de rotation de la couronne planétaire 13, 16. Les trois prises de puissances offrent entre elles des relations de réduction, fonction de leur mouvement relatif, connues de l'homme de l'art. Le mécanisme du train épicycloïdal est réversible et chaque prise de puissance peut être utilisée en entrée ou en sortie. Un mouvement est appliqué en entrée à l'une quelconque des prises de puissance. Le mouvement obtenu en sortie sur une seconde quelconque des prises de puissance restante, est fonction du mouvement de pilotage appliqué à la troisième des prises de puissance. Le choix des prises de puissance parmi les trois prises possibles détermine le rapport de réduction entre l'entrée et la sortie selon des relations connues de l'homme de l'art. Chacune des trois prises de puissance disponibles peut être employée indifféremment comme entrée, sortie ou pilotage, tout en restant dans le cadre de l'invention. Selon un mode de réalisation préférentiel illustré aux figures 1 à 6, l'arbre de propulsion 5 est solidaire et entraîne en rotation l'arbre porte satellites gauche 11 et l'arbre porte satellites droit 14 utilisés comme entrées des réducteurs 6,7. L'arbre planétaire central gauche 12 est solidaire et entraîne en rotation le train de roulement gauche 8. L'arbre planétaire central droit 15 est solidaire et entraîne en rotation le train de roulement droit 9. Les arbres planétaires centraux 12, 15 sont ici utilisés comme sorties. Les couronnes planétaires 13, 16 font office de pilotage.

Un dispositif de direction 3 utilise ce pilotage pour contrôler les comportements respectifs des réducteurs gauche 6 et droit 7 afin de commander les vitesses relatives transmises aux trains de roulement gauche 8 et droit 9. Le dispositif de direction 3 comprend un arbre de direction 25 et un inverseur 28. L'arbre de direction 25 engrène, par exemple au moyen d'un premier pignon solidaire dudit arbre 25, d'une part avec la couronne planétaire 13 du réducteur gauche 6 et, par exemple au moyen d'un second pignon solidaire dudit arbre 25, d'autre part avec l'entrée de l'inverseur 28. L'inverseur 28 est un dispositif qui a pour fonction de transmettre un mouvement donné après en avoir inversé le sens de rotation. L'homme de l'art connaît différents modes de réalisation d'un tel inverseur 28, par exemple à base d'engrenages. La sortie de l'inverseur engrène à son tour sur la couronne planétaire 16 du réducteur droit 7. L'inverseur 28 peut de manière équivalente s'intercaler entre le réducteur gauche 6 et l'arbre de direction 25. Le dispositif de direction 3 ainsi constitué produit une liaison d'entraînement en rotation par engrènement entre les deux couronnes planétaires gauche 13 et droite 16. Du fait de la présence de l'inverseur 28, un mouvement d'une couronne planétaire produit un mouvement de sens opposé au niveau de l'autre couronne planétaire.

Avantageusement, le dispositif de direction 3 présente un rapport de réduction égal à 1 (ou plus exactement -1 en valeur algébrique). Ainsi un mouvement d'une couronne planétaire produit un mouvement de même amplitude et de sens opposé au niveau de l'autre couronne planétaire. Un tel rapport de réduction est réalisé par un arbre de direction 25 présentant un rapport de réduction 1 entre le premier et le second pignon et un inverseur 28 présentant un rapport de réduction 1. Il peut aussi être réalisé, l'arbre de direction présentant un rapport de réduction k, par un inverseur présentant un rapport de réduction inverse 1/k.

Un moyen de réaliser un inverseur 28 est un train d'engrenage simple. Un tel train comportant deux engrenages permet d'inverser le sens de rotation par renvoi du mouvement de rotation du premier engrenage vers le second. L'homme de l'art peut ensuite compléter le mécanisme de base constitué autour d'un train d'engrenage simple. Ces compléments sont adoptés pour des raisons d'alignement des axes ou pour corriger un rapport de réduction. La figure 1 illustre un mode de réalisation de base. Les figures 2 à 7 illustrent un mode de réalisation avec trois roues dentées surnuméraires.

Le système de transmission 1 fonctionne selon le mode de réalisation de la figure 1. Les mouvements de rotation des trains de roulements gauche 8 et droit 9 sont liés par l'intermédiaire du dispositif de direction 3. Le système de transmission se comporte alors comme un différentiel permettant une répartition libre des vitesses de rotation entre les deux côtés gauche et droit. Ceci permet de réaliser un virage « libre » dans le cas où la direction est commandée par un système indépendant du système de transmission 1, par exemple par braquage des roues.

Afin de limiter le transfert de puissance ainsi effectué par le dispositif de direction 3 entre le côté gauche et le côté droit il est avantageux de freiner l'arbre de direction 25. Le système de transmission 1 se comporte alors comme un différentiel à glissement limité. Pour obtenir ce freinage de l'arbre de direction 25, un ralentisseur 29 est intégré au dispositif de direction 3. Ce ralentisseur 29 dans un mode de réalisation simple illustré à la figure 2 est un frein 17, par exemple solidaire du châssis du véhicule, agissant sur l'arbre de direction 25 afin de freiner son mouvement de rotation.

Dans les modes de réalisation précédemment décrits, le dispositif de direction est passif. Le système de transmission 1 n'assure pas de commande de direction. Il est avantageux, selon une caractéristique essentielle de l'invention, de compléter le dispositif de direction 3 par un moyen tel un moteur de direction 24 permettant d'entraîner en rotation l'arbre de direction 25. Ce moteur est avantageusement un moteur électrique. Ce moteur de direction 25 est inversible en ce qu'il peut tourner dans les deux sens. Cet entraînement s'effectue soit par une prise de force directe, soit par tout autre type de couplage en rotation équivalent. La figure 2 illustre un couplage au moyen d'un train d'engrenage intermédiaire. L'arbre de direction 25 ainsi motorisé réalise un transfert de puissance entre le côté gauche et le côté droit, délestant un côté au profit de l'autre. La puissance propulsive disponible au niveau de l'arbre de propulsion 5 à parts égales en entrée des réducteurs gauche 6 et droit 7, se répartit préférentiellement vers un des côtés et donc vers un des trains de roulement lorsque le moteur de direction 24 tourne dans un sens et pilote les réducteurs 6, 7 en sens contraire. Ce transfert de puissance est d'autant plus important que l'arbre de direction 25 tourne vite. Le transfert de puissance s'inverse au profit de l'autre train de roulement lorsque le sens de rotation de l'arbre de direction 25 s'inverse. La commande du moteur de direction 24 permet ainsi d'imposer des vitesses différentes au train de roulement gauche et au train de roulement droit. Le système de transmission 1 permet ainsi la réalisation d'une direction par ripage.

Avantageusement le dispositif de direction 3 comporte un embrayage de direction 30 entre le moteur de direction 24 et l'arbre de direction 25. La figure 3 illustre un exemple de réalisation d'un tel embrayage de direction 30. Cet embrayage 30 permet le cas échéant de désolidariser le moteur de direction 24 de l'arbre de direction 25.

Selon un mode de réalisation particulier, le moteur de direction 24 est avantageusement réversible. Il peut de plus être utilisé en mode passif. Le mode passif correspond à une absence de commande électrique. On entend par réversible le fait que ce moteur 24 peut, en l'absence de commande électrique, tourner lorsqu'il est entraîné en rotation par l'arbre de direction 25. Cette réversibilité n'est cependant pas totalement libre et un moteur électrique, en fonction de la résistance ohmique de son bobinage et des frottements mécaniques internes d'une utilisation en mode générateur, présente une résistance au mouvement par exemple pour recharger des batteries de puissance ou diminuer la charge de la génératrice principale. Cette résistance est mise à profit, selon un mode de réalisation avantageux, pour réaliser le ralentisseur 29 précédemment décrit. L'amplitude du ralentissement produit est modulable par la commande de l'embrayage de direction 30, avantageusement progressive.

Le dispositif de propulsion comporte avantageusement un embrayage de propulsion 10 entre le moteur de propulsion 4 et l'arbre de propulsion 5. La figure 3 illustre une réalisation d'un tel embrayage 10. Cet embrayage de propulsion 10 est monté sur l'arbre de propulsion 5 et présente une couronne dentée conique qui engrène sur un pignon conique solidaire du moteur de propulsion 4. Il est ainsi possible, en commandant l'embrayage de propulsion 10, de désaccoupler le moteur de propulsion 4 de l'arbre de propulsion 5.

La figure 3 illustre un premier moyen de couplage 31 progressif et inversible disposé entre le moteur de propulsion 4 et l'arbre de direction 25. Ce moyen de couplage 31 permet de transmettre la puissance produite par le moteur de propulsion 4 à l'arbre de direction 25. Ce moyen de couplage 31 est progressif en ce qu'il permet de commander progressivement l'amplitude de la puissance transmise depuis une puissance nulle jusqu'à une puissance maximale développée par le moteur de propulsion 4. Ce moyen de couplage 31 est inversible en ce qu'il permet de commander le sens de rotation dans lequel cette amplitude de puissance est transmise à l'arbre de direction 25.

La figure 3 illustre un mode de réalisation particulier de ce premier moyen de couplage 31. Le premier moyen de couplage 31 comprend au moins un renvoi de puissance 32 et deux coupleurs 26, 27. Le couplage 31 peut aussi être réalisé par un coupleur double intégré. Sur la figure 3 ce renvoi de puissance 32 comprend une couronne conique solidaire de l'embrayage 10 et un double pignon conique. La couronne conique engrène et est entraînée par le pignon conique du moteur de propulsion 4 et engrène et entraîne le double pignon conique qui entraîne à son tour par engrènement deux coupleurs 26, 27. Un point essentiel de l'invention est que le renvoi 32 est tel qu'il entraîne simultanément les deux coupleurs 26 et 27, mais chacun dans un sens de rotation opposé autour de l'arbre de direction 25. Les deux coupleurs 26 et 27 sont par défaut libres en rotation relativement à l'arbre 25. Chacun des coupleurs 26, 27 est pilotable séparément, progressivement tel un embrayage, afin de pouvoir entraîner en rotation l'arbre de direction 25. Les coupleurs 26, 27 sont réalisés par des embrayages permettant une commande progressive de la puissance transmise ou encore selon une réalisation avantageuse par des coupleurs hydromécaniques. Ces organes mécaniques sont commandés hydrauliquement afin de permettre de piloter de manière progressive un glissement entre leur entrée et leur sortie. Les deux coupleurs 26, 27 sont pilotés de manière exclusive l'un de l'autre. Lorsque l'un des coupleurs est piloté, la puissance issue du moteur de propulsion 4 est transmise et entraîne l'arbre de direction 25 dans un sens de rotation. Lorsque l'autre des coupleurs est piloté, la puissance issue du moteur de propulsion 4 est transmise et entraîne l'arbre de direction 25 dans le sens opposé. Ainsi un tel premier moyen de couplage 31 permet, le moteur de propulsion 4 délivrant une puissance constante, de délivrer tout ou partie de cette puissance pour entraîner l'arbre de direction 25 dans un sens de rotation ou dans l'autre. Il est ainsi possible de palier un dysfonctionnement du moteur de direction 24 en prélevant de la puissance au moteur de propulsion 4 pour entraîner en rotation l'arbre de direction 25. Cet entraînement est contrôlé en sens et en amplitude par un pilotage des coupleurs 26, 27 du moyen de couplage 31. L'entraînement de l'arbre de direction 25 par le moteur de propulsion 4 peut s'effectuer aussi lorsque le moteur de direction 24 est opérationnel. Les puissances sont alors complémentaires. La puissance supplémentaire apportée ainsi par le moteur de propulsion 4 permet d'améliorer les performances en direction dans les phases de forte demande de puissance. En conséquence, il est possible de réduire le dimensionnement du moteur de direction 24 avec les avantages économiques et massiques afférents. L'entraînement de l'arbre de direction 25 par le moteur de propulsion 4 peut s'effectuer avec ou sans entraînement simultané de l'arbre de propulsion 5 selon que l'embrayage de propulsion 10 est actif ou non.

Il est possible de constituer un ralentisseur de l'arbre de propulsion en actionnant simultanément les deux coupleurs 26 et 27 et un autre ralentisseur peut être constitué en utilisant le moteur 4 en frein.

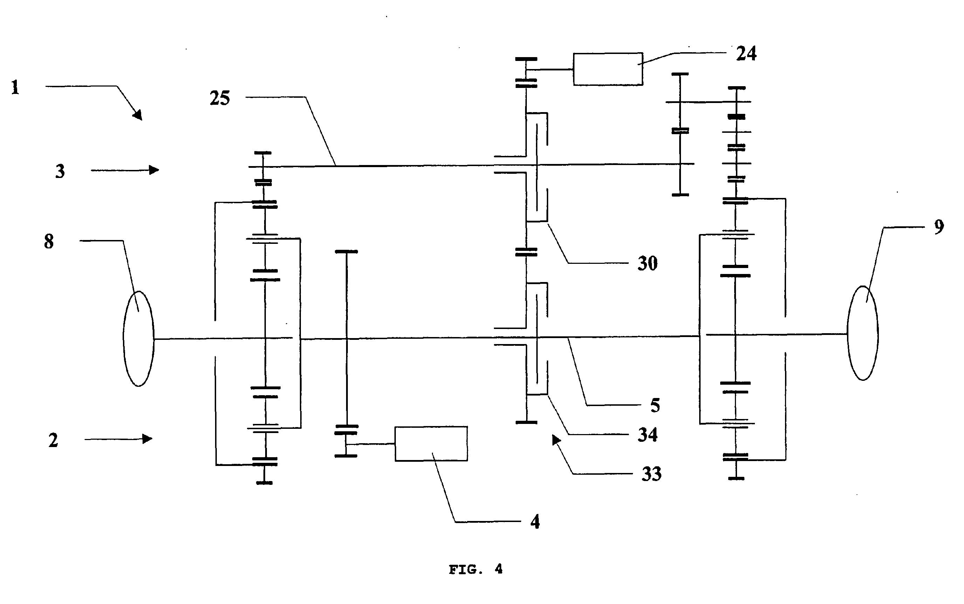

Sur la figure 4, on a représenté un second moyen de couplage 33 entre le moteur de direction 24 et l'arbre de propulsion 5. Ce second moyen de couplage est le pendant du premier. Il permet de transférer une partie de la puissance du moteur de direction 24, par exemple lorsque cette puissance n'est pas employée, à l'arbre de propulsion 5. Un tel second moyen de couplage 33 peut être réalisé de manière illustrative par un embrayage 34 combiné à un moyen d'entraînement tel un train d'engrenage. Le train d'engrenage lie en rotation l'arbre de propulsion 5 et le moteur de direction 25. L'embrayage 34 permet sur commande de coupler ou désaccoupler cette liaison. Le moteur de direction 24 peut ainsi être utilisé en tant que de besoin pour entraîner l'arbre de propulsion 4. L'utilisation des deux embrayages 30, 34 permet de répartir la puissance du moteur de direction 24 indépendamment entre les deux arbres de propulsion 5 et de direction 25. La puissance ainsi fournie à l'arbre de propulsion 5 vient soit remplacer soit compléter la puissance issue du moteur de propulsion 4. Le moteur de direction 24 peut ainsi compléter la fourniture de puissance du moteur de propulsion 4 lors de phases de grande demande de puissance ou encore remplacer ce moteur de propulsion 4 le cas échéant défaillant pour assurer une propulsion en mode dégradé.

Il a été vu dans la description faite ci-dessus différents modes de fonctionnement du système 1 selon l'invention. Ces modes sont repris et détaillés ci-dessous.

Sur la figure 5, le système 1 comprend avantageusement un boîtier de commande et contrôle 40, capable de commander les différents organes pilotables que sont l'embrayage de propulsion 10, l'embrayage de direction 30, l'embrayage de couplage 34 du second moyen de couplage 33 et les deux coupleurs 26, 27 du premier moyen de couplage 31. Cette commande est possible au moyen d'une connexion électrique schématisée par un trait pointillé. Ce trait est soit figuré en entier, soit pour des raisons de clarté, uniquement figuré accompagné du numéro d'index de l'organe interfacé. Une flèche, au niveau du boîtier 40 figure le sens prioritaire des informations échangées. Une flèche sortante pour un effecteur et une flèche entrante pour un capteur. Ledit boîtier 40 peut commander ces différents organes afin de sélectionner le mode de fonctionnement du système 1 de transmission.

Avantageusement cette sélection de mode peut s'effectuer de manière automatique en cas de défaillance. Pour cela le système de transmission 1 comprend un premier moyen 38 capable de détecter une défaillance du moteur de propulsion 4 et un second moyen 39 capable de détecter une défaillance du moteur de direction 24. Ces moyens de détection de défaillance 38 et 39 sont interfacés avec le boîtier de commande et contrôle 40. Différentes réalisations sont possibles pour les moyens de détection de défaillance 38 et 39. Un mode de réalisation possible est de disposer un premier capteur de vitesse 36 sur l'arbre de propulsion 5. La vitesse mesurée comparée à la commande du moteur de propulsion 4 est ainsi indicative d'une défaillance dudit moteur 4. De manière similaire un second capteur de vitesse 37 sur l'arbre de direction 25 est indicateur d'une défaillance du moteur de direction 24.

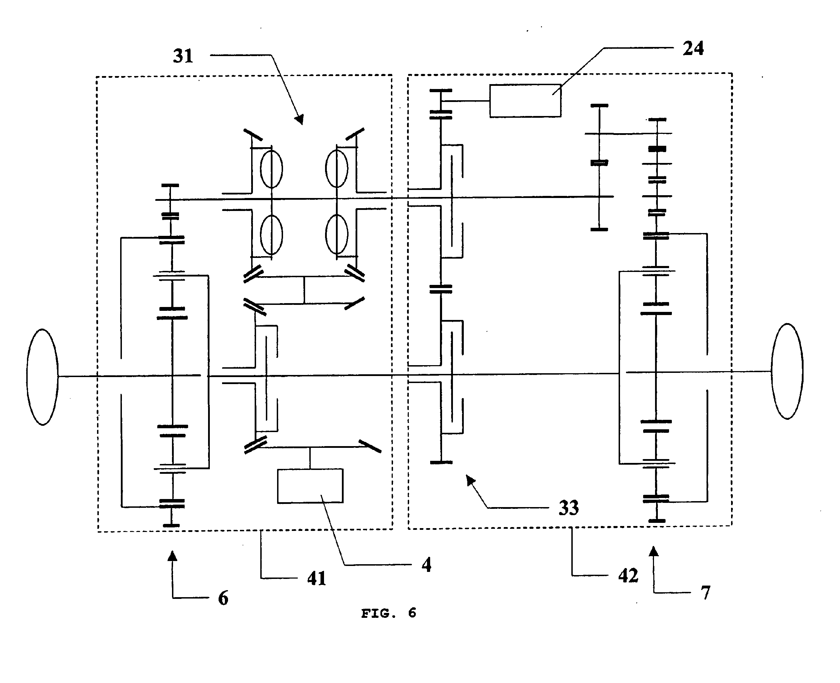

La figure 6 illustre un avantage important de l'invention. Les différents modes de réalisation du système 1 de transmission selon l'invention présentent ce même avantage. De par la construction du système 1, il est possible de séparer les différents organes constitutifs dudit système 1 en deux blocs. Le premier bloc 41 comprend principalement le réducteur gauche 6, le moteur de propulsion 4 et le premier moyen de couplage 31. Le second bloc 42 comprend principalement le réducteur droit 7, le moteur de direction 24 et le second moyen de couplage 33. D'autres répartitions des organes entre ces deux blocs 41 et 42 sont possibles. Dans tous les cas chacun des deux moteurs 4, 24, est placé dans un des blocs afin de les éloigner. Les deux blocs 41 et 42 ne sont reliés que par les deux arbres de propulsion 5 et de direction 25. Ceci permet de disposer au sein d'un véhicule équipé d'un système de transmission 1 selon l'invention chacun des deux blocs 41, 42 éloignés l'un de l'autre. Ceci est avantageux pour réserver des espaces libres pour d'autres fonctions. Ceci est particulièrement avantageux pour réduire la vulnérabilité du système 1. Si l'un des moteurs 4, 24 est détruit suite à une attaque subie par le bloc 41, 42 qui contient ce moteur, les fonctions de propulsion et de direction peuvent encore être assurées, en mode dégradé, par le moteur restant 24,4.

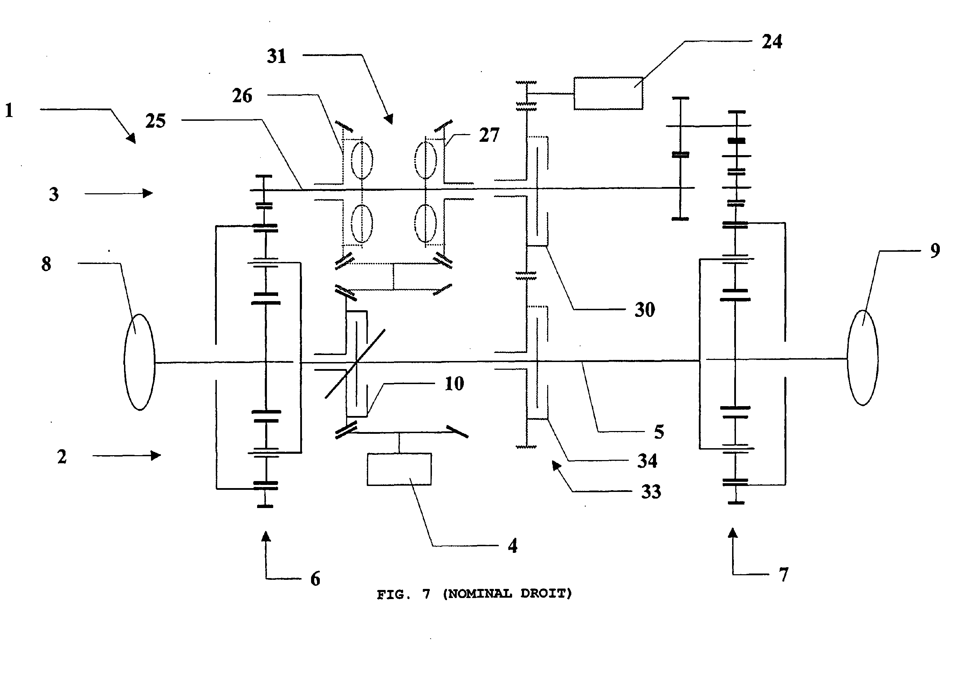

En fonction de commandes de mode issues de l'extérieur du système 1 et des informations issues des moyens de détection de défaillance 38 et 39 le boîtier de commande et contrôle 40 pilote les embrayages 10, 30, 34 et les coupleurs 26, 27 afin de placer le système de transmission 1 dans différents modes de fonctionnement parmi NOMINAL DROIT, NOMINAL VIRAGE, PUISSANCE PROPULSION, PUISSANCE DIRECTION, DIRECTION DEGRADE, PROPULSION DEGRADE DROIT et PROPULSION DEGRADE VIRAGE. Ces différents modes sont détaillés ci-dessous et illustrés par les figures 7 à 13.

Les modes NOMINAUX correspondent aux fonctionnements normaux du système de transmission 1 avec tous les organes opérationnels. Les modes PUISSANCE correspondent à des modes soutenus ou un moteur vient compléter l'apport de puissance nécessaire de son homologue. Les modes DEGRADES correspondent aux modes applicables en cas de défaillance d'un des deux moteurs. Sur les figures 7 à 13 sont représentés en traits forts les organes fonctionnels et en traits grisés les organes défectueux ou inutilisés dans le mode décrit. Une barre oblique superposée à un embrayage ou à un coupleur signifie que ce dernier est actif.

Le mode NOMINAL DROIT, illustré à la figure 7, correspond à une progression en ligne droite. Les deux moteurs sont opérationnels. Dans ce mode l'embrayage de propulsion 10 est actif, l'embrayage de couplage 34 et les coupleurs sont inactifs. La puissance de propulsion est toute entière fournie par le moteur de propulsion 4 pour être transmise aux trains de roulements 8, 9. Le dispositif de direction 3, libre de commande agit comme un différentiel et peut accepter un virage produit par un système de direction extérieur par exemple par braquage. Le dispositif de direction 3, tel un différentiel, transfère la puissance d'un côté vers l'autre en fonction des besoins. Ce transfert peut être limité au moyen du ralentisseur 29 afin de reproduire un différentiel à glissement limité. Cette limitation s'effectue, dans le mode de réalisation, illustré par activation de l'embrayage de direction 30 et l'utilisation du freinage produit par le moteur de direction 24 en utilisant sa réversibilité en mode passif.

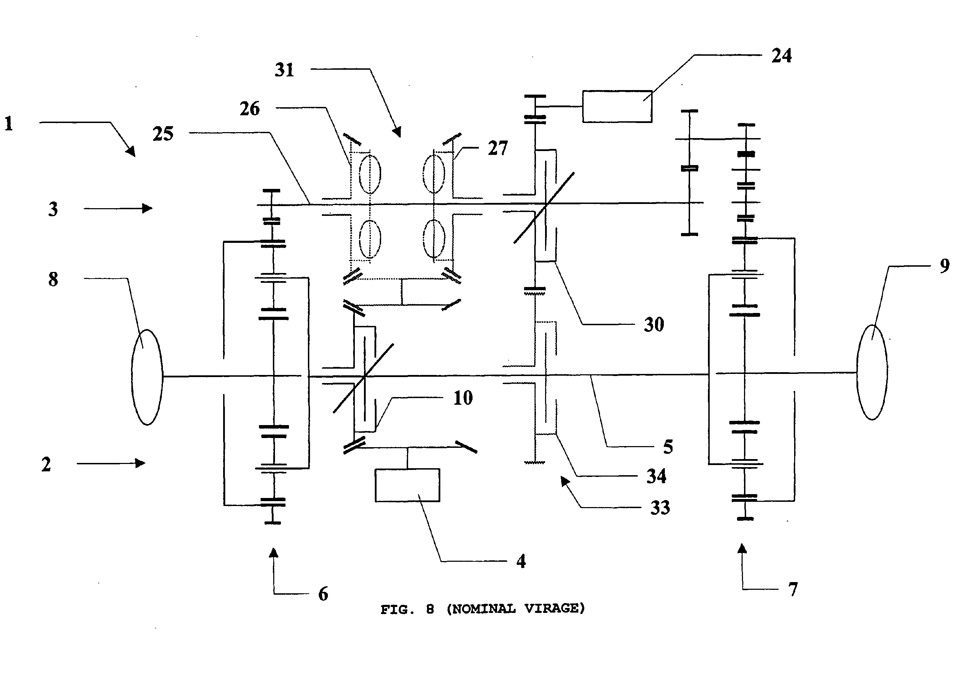

Le mode NOMINAL VIRAGE, illustré à la figure 8, correspond à une utilisation du système de transmission 1 pour produire un virage par ripage. Ce virage par ripage peut réaliser un pivot, en l'absence de propulsion. Dans ce mode le moteur de propulsion 4 et le moteur de direction 24 sont opérationnels et entraînent respectivement l'arbre de propulsion 5 et l'arbre de direction 25. Pour cela l'embrayage de propulsion 10 et l'embrayage de direction 30 sont actifs. Ce mode est d'une commande simple en ce qu'il découple la fonction propulsion contrôlée uniquement par le moteur de propulsion 4 de la fonction direction contrôlée uniquement par le moteur de direction 24. Un virage à gauche est commandé en faisant tourner le moteur de direction 24 dans un sens et un virage à droite est commandé en faisant tourner ce même moteur de direction 24 dans le sens opposé.

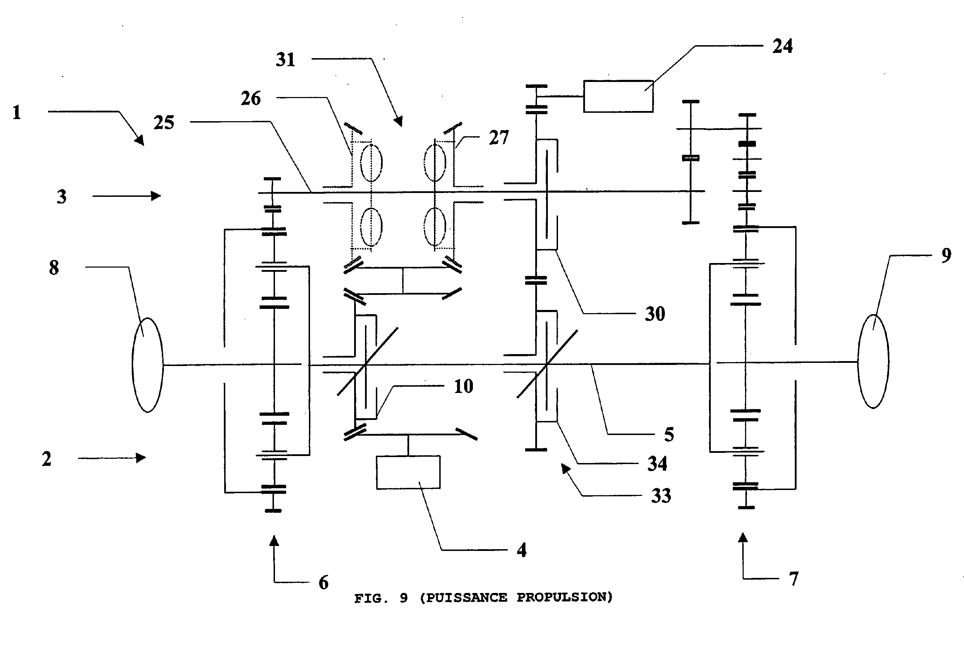

Le mode PUISSANCE PROPULSION, illustré à la figure 9, correspond à une utilisation extrême du système 1. Dans ce mode les deux moteurs 4, 24 sont opérationnels et un surplus de puissance est requis pour la propulsion. La puissance du moteur de direction 24, non sollicitée par la fonction direction, est utilisée pour augmenter la puissance dédiée à la propulsion. Pour ce faire le moteur de direction 24 est désaccouplé de l'arbre de direction 25. Pour cela l'embrayage de direction 30 est inactif. Ledit moteur de direction 24 est couplé avec l'arbre de propulsion 5 par l'intermédiaire du second moyen de couplage 33, l'embrayage de couplage 34 étant actif. Ainsi la puissance du moteur de direction 25 vient s'adjoindre à celle du moteur de propulsion 4.

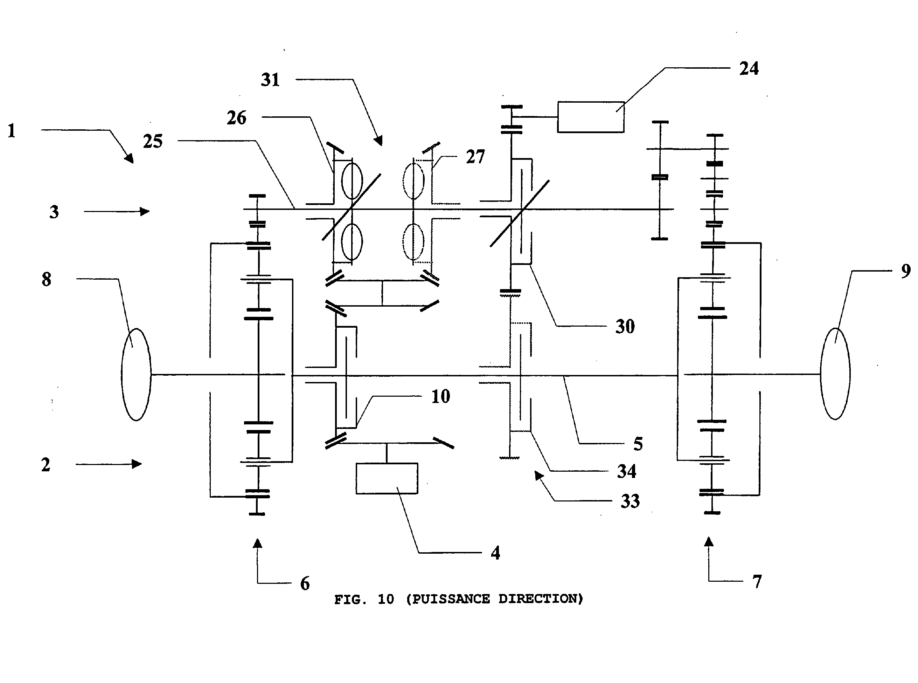

Le mode PUISSANCE DIRECTION, illustré à la figure 10, correspond à une autre utilisation extrême du système 1. Dans ce mode les deux moteurs 4, 24 sont opérationnels et un surplus de puissance est requis pour la direction uniquement. Le moteur de direction 24 entraîne l'arbre de direction 25 comme dans le mode NOMINAL VIRAGE via l'embrayage de direction 30 actif. Le moteur de propulsion 4 est désaccouplé de l'arbre de propulsion 5, l'embrayage de propulsion 10 étant inactif. La puissance du moteur de propulsion 4 est redirigée vers l'arbre de direction 25 via le premier moyen de couplage 31. Les puissances issues des deux moteurs 4, 24 sont additionnées. Lorsque le moteur de direction 24 entraîne l'arbre de direction 25 dans un sens, celui des deux coupleurs 26, 27 qui tourne dans le même sens est piloté afin de transmettre la puissance issue du moteur de propulsion 4 de telle manière qu'elles viennent s'ajouter à la puissance issue du moteur de direction 24. Lorsque le moteur de direction 24 entraîne l'arbre de direction 25 dans le sens opposé, afin de produire un pivot de sens opposé, l'autre des deux coupleurs 26, 27 est piloté afin de transmettre la puissance du moteur de propulsion 4 toujours de telle manière qu'elle vienne s'ajouter à la puissance issue du moteur de direction 24. Ceci permet, en pivot pur, c'est-à-dire en absence de propulsion, de disposer d'une puissance augmentée.

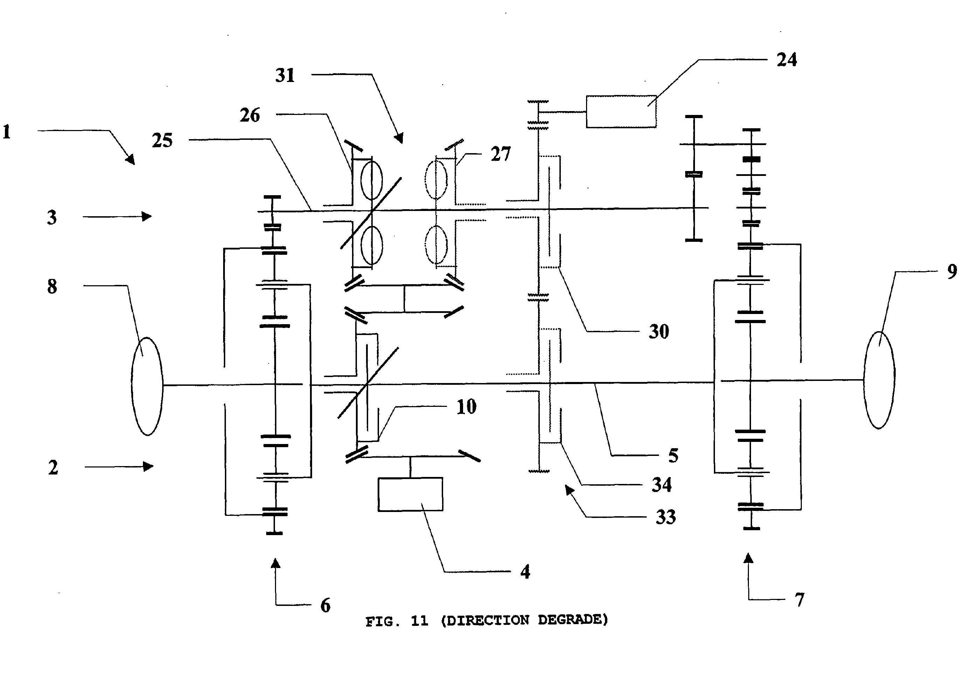

Le mode DIRECTION DEGRADEE, illustré à la figure 11, correspond à une utilisation dégradée du système 1. Dans ce mode le moteur direction 24 est défaillant. Ce mode tente de conserver certaines aptitudes de mobilité au véhicule. La propulsion est assurée normalement comme en mode NOMINAL. Le moteur de propulsion 4 entraîne l'arbre de propulsion 5, l'embrayage de propulsion 10 étant actif. De plus le moteur de propulsion 4 entraîne les coupleurs 26, 27 du premier moyen de couplage 31. La fonction direction est assurée par entraînement de l'arbre de direction 25 au travers de ce premier moyen de couplage 31. Une partie de la puissance issue du moteur de propulsion est utilisée à cette fin. Si le pilotage d'un des coupleurs 26, 27 permet d'entraîner l'arbre de direction 25 dans un sens de rotation et de produire ainsi un virage vers la gauche, alors alternativement le pilotage de l'autre coupleur permet d'entraîner l'arbre de direction 25 dans l'autre sens de rotation et de produire un virage vers la droite. Avec des performances éventuellement diminuées, le véhicule conserve cependant, avec le seul moteur de propulsion 4 opérationnel, une mobilité en propulsion et en direction.

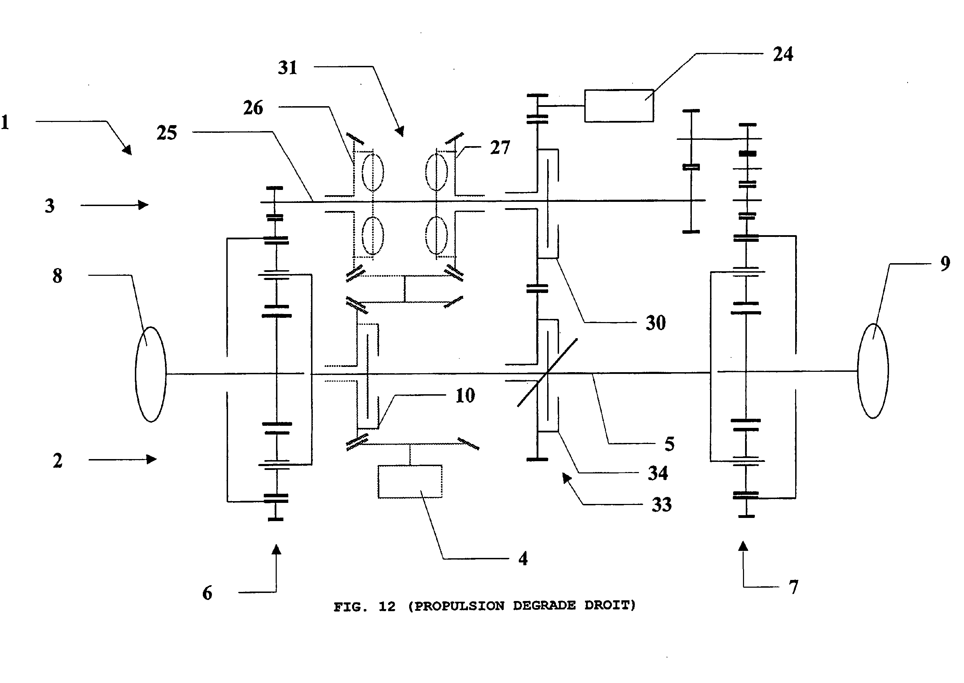

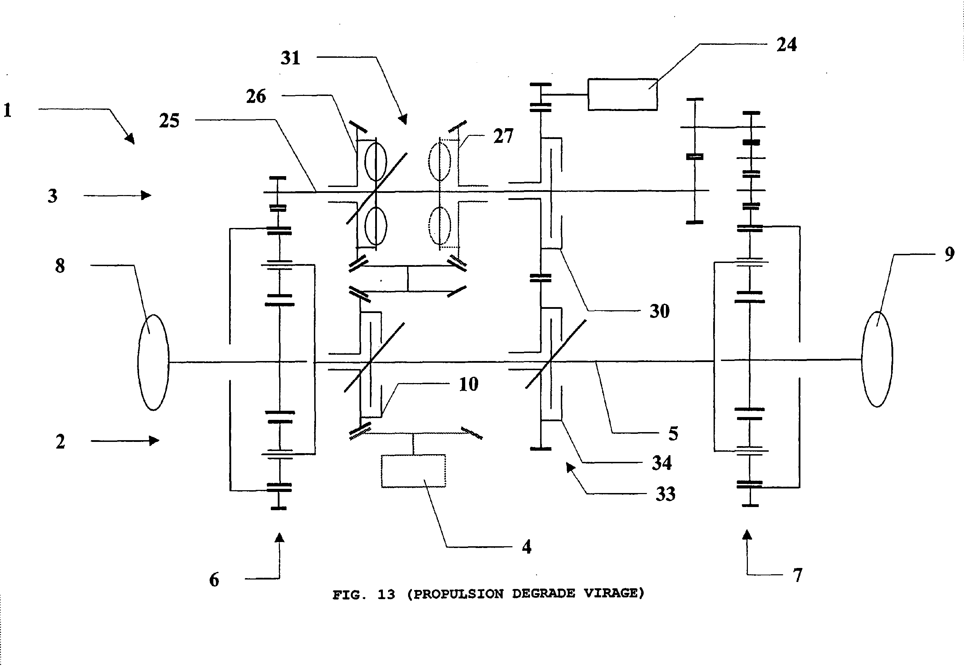

Le mode PROPULSION DEGRADEE, illustré aux figures 12 et 13, correspond à une utilisation dégradée du système 1. Dans ce mode le moteur de propulsion 4 est défaillant. Ce mode tente de conserver certaines aptitudes de mobilité au véhicule. Le moteur direction 24 supplée au moteur défaillant pour la propulsion en transférant sa puissance sur l'arbre de propulsion 4. Ceci s'effectue au travers du second moyen de couplage 33 et de l'embrayage de couplage 34 qui est actif. Dans ce cas l'arbre de direction n'est pas entraîné par le moteur de direction 24, l'embrayage de direction 30 étant inactif. Ce fonctionnement, en ligne droite, correspond au mode PROPULSION DEGRADEE DROIT illustré à la figure 12.

Si, de plus, un virage est souhaité, le système est dans un mode PROPULSION DEGRADEE VIRAGE illustré à la figure 13. Le moteur de direction 24, déjà utilisé pour la propulsion, n'est plus disponible pour entraîner directement l'arbre de direction 25 comme dans le mode NOMINAL. Le premier moyen de couplage 31 est alors mis en oeuvre pour prélever une partie de la puissance disponible sur l'arbre de propulsion 4 afin d'entraîner l'arbre de direction 25. L'embrayage de propulsion 10 est actif permettant la transmission du mouvement de l'arbre de propulsion 4 aux coupleurs 26, 27. A l'instar du fonctionnement du mode DIRECTION DEGRADEE, la fonction direction est assurée par entraînement de l'arbre de direction 25 au travers du premier moyen de couplage 31. Une partie de la puissance issue de l'arbre de propulsion 5 est utilisée à cette fin. Si le pilotage d'un des coupleurs 26, 27 permet d'entraîner l'arbre de direction 25 dans un sens de rotation et de produire ainsi un virage vers la gauche, alors alternativement le pilotage de l'autre coupleur permet d'entraîner l'arbre de direction 25 dans l'autre sens de rotation et de produire un virage vers la droite.

## Revendications

1. Système de transmission hybride de puissance motrice (1) pour véhicule à train de roulement de type roue ou chenille et à direction par ripage intégrant un dispositif de propulsion (2) comprenant un moteur de propulsion (4), un arbre de propulsion (5), un réducteur gauche (6) et un réducteur droit (7), ledit arbre de propulsion (5) étant entraîné par ledit moteur de propulsion (4) et entraînant d'une part un train de roulement droit (9) au travers du réducteur droit (7) et d'autre part un train de roulement gauche (8) au travers du réducteur gauche (6), ledit système de transmission (1) comprenant un dispositif de direction (3) pilotant le réducteur gauche (6) et le réducteur droit (7) afin de produire des vitesses différentes entre le train de roulement gauche (8) et le train de roulement droit (9), le réducteur gauche (6) comprenant un premier train épicycloïdal dont l'arbre porte satellites (11) est solidaire de l'arbre de propulsion (5) et l'arbre planétaire central (12) est solidaire du train de roulement gauche (8), le réducteur droit (7) comprenant un second train épicycloïdal dont l'arbre porte satellites (14) est solidaire de l'arbre de propulsion (5) et l'arbre planétaire central (15) est solidaire du train de roulement droit (9) et le dispositif de direction (3) comprenant un arbre de direction (25) et un inverseur (28), ledit arbre de direction (25) engrenant d'une part sur la couronne planétaire (13) du premier train épicycloïdal et d'autre part sur la couronne planétaire (16) du second train épicycloïdal via l'inverseur (28), système de transmission **caractérisé en ce qu'**il comprend un premier moyen de couplage (31) progressif et inversible entre le moteur de propulsion (4) et l'arbre de direction (25).

2. Système de transmission hybride (1) selon la revendication 1, **caractérisé en ce que** le dispositif de direction (3) présente un rapport de réduction égal à 1.

3. Système de transmission hybride (1) selon la revendication 1 ou 2, **caractérisé en ce que** l'inverseur (28) comporte un train d'engrenage simple.

4. Système de transmission hybride (1) selon l'une quelconque des revendications 1 à 3, **caractérisé en ce que** le dispositif de direction comprend un ralentisseur (29) de l'arbre de direction (25).

5. Système de transmission hybride (1) selon la revendication 4, **caractérisé en ce que** le ralentisseur (29) est un frein.

6. Système de transmission hybride (1) selon l'une quelconque des revendications 1 à 5, **caractérisé en ce que** le dispositif de direction (3) comprend un moteur de direction (24) inversible entraînant l'arbre de direction (25).

7. Système de transmission hybride (1) selon la revendication 6, **caractérisé en ce que** le dispositif de direction (3) comporte un embrayage de direction (30) entre le moteur de direction (24) et l'arbre de direction (25).

8. Système de transmission hybride (1) selon l'une quelconque des revendications 4 à 7, **caractérisé en ce que** le ralentisseur (29) est constitué par le moteur de direction (24) réversible et passif.

9. Système de transmission hybride (1) selon l'une quelconque des revendications précédentes, **caractérisé en ce que** le dispositif de propulsion (2) comporte un embrayage de propulsion (10) entre le moteur de propulsion (4) et l'arbre de propulsion (5).

10. Système de transmission hybride (1) selon la revendication 1, **caractérisé en ce que** le premier moyen de couplage (31) comprend au moins un renvoi de puissance (32), un premier coupleur (26) pilotable et un second coupleur (27) pilotable, le moteur de propulsion (4) entraînant le renvoi de puissance (32), ledit renvoi de puissance (32) entraînant les deux coupleurs (26, 27) en sens opposé, lesdits coupleurs (26, 27) entraînant l'arbre de direction (25) lorsqu'ils sont pilotés.

11. Système de transmission hybride (1) selon l'une quelconque des revendications précédentes, **caractérisé en ce qu'**il comprend un second moyen de couplage (33) entre le moteur de direction (24) et l'arbre de propulsion (5).

12. Système de transmission hybride (1) selon la revendication 11, **caractérisé en ce que** le second moyen de couplage (33) comprend un embrayage de couplage (34).

13. Système de transmission hybride (1) selon l'une quelconque des revendications précédentes, **caractérisé en ce qu'**il comprend un premier moyen de détection d'une défaillance (38) du moteur de propulsion (4), un second moyen de détection d'une défaillance (39) du moteur de direction (24), un boîtier de commande et de contrôle (40) des embrayages (10, 30, 34) et des coupleurs (26, 27), afin de piloter les différentes configurations nominales et dégradées du système suivant les modes NOMINAL DROIT, NOMINAL VIRAGE, PUISSANCE PROPULSION, PUISSANCE DIRECTION, DIRECTION DEGRADE, PROPULSION DEGRADE DROIT et PROPULSION DEGRADE VIRAGE.

14. Système de transmission hybride (1) selon la revendication précédente, **caractérisé en ce que** le premier moyen de détection d'une défaillance (38) du moteur de propulsion (4) comprend un premier capteur de vitesse (36) de l'arbre de propulsion (5) et **en ce que** le second moyen de détection d'une défaillance (39) du moteur de direction (24) comprend un second capteur de vitesse (37) de l'arbre de direction (25).

## Claims

1. Hybrid motor power transmission system (1) for a wheeled or tracked vehicle with slip-steering integrating a rear wheel drive device (2) comprising a rear-wheel drive engine (4) a drive shaft (5), a left speed reducer (6) and a right speed reducer (7), said drive shaft (5) being driven by said drive engine (4) and driving firstly right running gear (9) through the right speed reducer (7) and secondly left running gear (8) through the left speed reducer (6), said transmission system (1) comprising a steering device (3) piloting the left speed reducer (6) and the right speed reducer (7) so as to produce different speeds between the left running gear (8) and the right running gear (9), the left speed reducer (6) comprising a first planetary gearset whose planet carrier (11) is integral with the drive shaft (5) and the central planet shaft (12) is integral with the left running gear (8), the right speed reducer (7) comprising a second planetary gearset whose planet carrier (14) is integral with the drive shaft (5) and the central planet shaft (15) is integral with the right running gear (9) and the steering device (3) comprising a steering shaft (25) and a reversing device (28), said steering shaft (25) meshing firstly on the crown wheel (13) of the first planetary gearset and secondly on the crown wheel (16) of the second planetary gearset via the reversing device (28), such transmission system ***wherein*** it comprises a first gradual and reversible coupling means (31) between the drive engine (4) and the steering shaft (25).

2. Hybrid transmission system (1) according to Claim 1, wherein the steering device (3) has a reduction ratio of 1.

3. Hybrid transmission system (1) according to Claim 1 or 2, wherein the reversing device (28) incorporates a simple gear train.

4. Hybrid transmission system (1) according to any one of Claims 1 to 3, wherein the steering device comprises a decelerator (29) for the steering shaft (25).

5. Hybrid transmission system (1) according to Claim 4, wherein the decelerator (29) is a brake.

6. Hybrid transmission system (1) according to any one of Claims 1 to 5, wherein the steering device (3) comprises a reversible steering motor (24) driving the steering shaft (25).

7. Hybrid transmission system (1) according to Claim 6, wherein the steering device (3) incorporates a steering clutch (30) between the steering motor (24) and the steering shaft (25).

8. Hybrid transmission system (1) according to any one of Claims 4 to 7, wherein the decelerator (29) is constituted by the reversible and passive steering motor (24).

9. Hybrid transmission system (1) according to any one of the above Claims, wherein the drive device (2) incorporates a drive clutch (10) between the drive engine (4) and the drive shaft (5).

10. Hybrid transmission system (1) according to Claim 1, wherein the first coupling means (31) comprise at least one angle transmission (32), a first steerable coupler (26) and a second steerable coupler (27), the drive engine (4) driving the angle transmission (32), said angle transmission (32) driving the two couplers (26, 27) in opposite directions, said couplers (26, 27) driving the steering shaft (25) when they are being piloted.

11. Hybrid transmission system (1) according to any one of the above Claims, wherein it comprises second coupling means (33) between the steering motor (24) and the drive shaft (5).

12. Hybrid transmission system (1) according to Claim 11, wherein the second coupling means (33) comprise a coupling clutch (34).

13. Hybrid transmission system (1) according to any one of the above Claims, wherein it comprises first means to detect a failure (38) of the drive engine (4), second means to detect a failure (39) of the steering motor (24), a control and monitoring box (40) for the clutches (10, 30, 34) and couplers (26, 27) so as to pilot the different nominal and downgraded configurations of the system according to the modes RIGHT NOMINAL, TURN NOMINAL, DRIVE POWER, STEERING POWER, DOWNGRADED STEERING, RIGHT DOWNGRADED DRIVE and DOWNGRADED TURN DRIVE.

14. Hybrid transmission system (1) according to the previous Claim, wherein the first means to detect a failure (38) of the drive engine (4) comprise a first speed sensor (36) for the drive shaft (5) and wherein the second means to detect a failure (39) of the steering motor (24) comprise a second speed sensor (37) for the steering shaft (25).

## Patentansprüche

1. Hybrides Übertragungssystem der Antriebsleistung (1) für Fahrzeug mit Rad- oder Raupenfahrwerk und mit Rutschlenkung, das eine Antriebsvorrichtung (2) integriert, umfassend einen Antriebsmotor (4), eine Antriebswelle (5), ein linkes Untersetzungsgetriebe (6) und ein rechtes Untersetzungsgetriebe (7), wobei die genannte Antriebswelle (5) von dem genannten Antriebsmotor (4) angetrieben wird und einerseits ein rechtes Laufwerk (9) über das rechte Untersetzungsgetriebe (7) und andererseits ein linkes Laufwerk (8) über das linke Untersetzungsgetriebe (6) antreibt, wobei das genannte Übertragungssystem (1) eine Lenkvorrichtung (3) umfasst, die das linke Untersetzungsgetriebe (6) und das rechte Untersetzungsgetriebe (7) steuert, um unterschiedliche Geschwindigkeiten zwischen dem linken Laufwerk (8) und dem rechten Laufwerk (9) zu bilden, wobei das linke Untersetzungsgetriebe (6) ein erstes Umlaufgetriebe umfasst, dessen Satellitenträgerwelle (11) fest mit der Antriebswelle (5) verbunden ist und dessen zentrale Planetenwelle (12) fest mit dem linken Laufwerk (8) verbunden ist, wobei das rechte Untersetzungsgetriebe (7) ein zweites Umlaufgetriebe umfasst, dessen Satellitenträgerwelle (14) fest mit der Antriebswelle (5) verbunden ist und dessen zentrale Planetenwelle (15) fest mit dem rechten Laufwerk (9) verbunden ist, und wobei die Lenkvorrichtung (3) eine Lenkwelle (25) und ein Umkehrgetriebe (28) umfasst, wobei die genannte Lenkwelle (25) einerseits in den Planetenring (13) des ersten Umlaufgetriebes und andererseits in den Planetenring (16) des zweiten Umlaufgetriebes über das Umkehrgetriebe (28) eingreift, wobei das Übertragungssystem **dadurch gekennzeichnet ist, dass** es ein erstes progressives und umkehrbares Kuppelmittel (31) zwischen dem Antriebsmotor (4) und der Lenkwelle (25) umfasst.

2. Hybrides Übertragungssystem (1) nach Anspruch 1, **dadurch gekennzeichnet, dass** die Lenkvorrichtung (3) ein Untersetzungsverhältnis von gleich 1 aufweist.

3. Hybrides Übertragungssystem (1) nach Anspruch 1 oder 2, **dadurch gekennzeichnet, dass** das Umkehrgetriebe (28) einen einfachen Getriebezug umfasst.

4. Hybrides Übertragungssystem (1) nach irgendeinem der Ansprüche 1 bis 3, **dadurch gekennzeichnet, dass** die Lenkvorrichtung einen Verlangsamer (29) der Lenkwelle (25) umfasst.

5. Hybrides Übertragungssystem (1) nach Anspruch 4, **dadurch gekennzeichnet, dass** der Verlangsamer (29) eine Bremse ist.

6. Hybrides Übertragungssystem (1) nach irgendeinem der Ansprüche 1 bis 5, **dadurch gekennzeichnet, dass** die Lenkvorrichtung (3) einen umkehrbaren Lenkmotor (24) umfasst, der die Lenkwelle (25) antreibt.

7. Hybrides Übertragungssystem (1) nach Anspruch 6, **dadurch gekennzeichnet, dass** die Lenkvorrichtung (3) eine Lenkkupplung (30) zwischen dem Lenkmotor (24) und der Lenkwelle (25) umfasst.

8. Hybrides Übertragungssystem (1) nach irgendeinem der Ansprüche 4 bis 7, **dadurch gekennzeichnet, dass** der Verlangsamer (29) von dem Lenkmotor (24), der reversibel und passiv ist, gebildet wird.

9. Hybrides Übertragungssystem (1) nach irgendeinem der vorhergehenden Ansprüche, **dadurch gekennzeichnet, dass** die Antriebsvorrichtung (2) eine Antriebskupplung (10) zwischen dem Antriebsmotor (4) und der Antriebswelle (5) umfasst.

10. Hybrides Übertragungssystem (1) nach Anspruch 1, **dadurch gekennzeichnet, dass** das erste Kuppelmittel (31) wenigstens ein Leistungsvorgelege (32), einen ersten ansteuerbaren Kuppler (26) und einen zweiten ansteuerbaren Kuppler (27) umfasst, wobei der Antriebsmotor (4) das Leistungsvorgelege (32) antreibt, wobei das genannte Leistungsvorgelege (32) die beiden Kuppler (26, 27) in entgegen gesetzter Richtung antreibt, wobei die genannten Kuppler (26, 27) die Lenkwelle (25) antreiben, wenn sie angesteuert werden.

11. Hybrides Übertragungssystem (1) nach irgendeinem der vorhergehenden Ansprüche, **dadurch gekennzeichnet, dass** es ein zweites Kuppelmittel (33) zwischen dem Lenkmotor (24) und der Antriebswelle (5) umfasst.

12. Hybrides Übertragungssystem (1) nach Anspruch 11, **dadurch gekennzeichnet, dass** das zweite Kuppelmittel (33) eine Kupplung zum Kuppeln (34) umfasst.

13. Hybrides Übertragungssystem (1) nach irgendeinem der vorhergehenden Ansprüche, **dadurch gekennzeichnet, dass** es ein erstes Mittel zur Erfassung eines Ausfalls (38) des Antriebsmotors (4), ein zweites Mittel zur Erfassung eines Ausfalls (39) des Lenkmotors (24), ein Gehäuse zur Steuerung und Überwachung (40) der Kupplungen (10, 30, 34) und der Kuppler (26, 27) umfasst, um die verschiedenen nominalen und abgestuften Konfigurationen des Systems anzusteuern gemäß dem Modus NOMINELL RECHTS, NOMINELL KURVE, ANTRIEBSLEISTUNG, LENKLEISTUNG, ABGESTUFTE LENKUNG, ABGESTUFTER ANTRIEB RECHTS und ABGESTUFTER ANTRIEB KURVE.

14. Hybrides Übertragungssystem (1) nach dem vorhergehenden Anspruch, **dadurch gekennzeichnet, dass** das erste Mittel zur Erfassung eines Ausfalls (38) des Antriebsmotors (4) einen ersten Drehzahlsensor (36) der Antriebswelle (5) umfasst, und dass das zweite Mittel zur Erfassung eines Ausfalls (39) des Lenkmotors (24) einen zweiten Drehzahlsensor (37) der Lenkwelle (25) umfasst.
